# FASCICULE DE BREVET EUROPEEN

(11) **EP 1 432 213 B1**
(45) Date de publication et mention de la délivrance du brevet: **21.06.2006**
(21) Numéro de dépôt: 03293123.0
(22) Date de dépôt: 12.12.2003
(51) Int. Cl.: H04L 29/08, H04L 12/58, H04L 29/06

(54) **Plate-forme de médiation et réseau de transport de messages**
Vermittlungsplattform und Nachrichtenübermittlungsnetzwerk
Mediation platform and message transport network

(30) Priorité: 18.12.2002 FR 0216262
(43) Date de publication de la demande: 23.06.2004
(73) Titulaire: France Telecom S.A., 75015 Paris (FR)
(72) Inventeur: Mathieu, Bertrand, 22300 Lannion (FR); Carlinet, Yannick, 22300 Saint-Michel-en-Greves (FR); Gourhant, Yvon, 22300 Lannion (FR)
(74) Mandataire: Maillet, Alain

(56) Documents cités:
- LUOTONEN A ET AL: "World-Wide Web proxies" COMPUTER NETWORKS AND ISDN SYSTEMS, NORTH HOLLAND PUBLISHING. AMSTERDAM, NL, vol. 27, no. 2, 1 novembre 1994 (1994-11-01), pages 147-154, XP004037985 ISSN: 0169-7552
- HUNT R: "Internet/Intranet firewall security-policy, architecture and transaction services" COMPUTER COMMUNICATIONS, BUTTERWORTHS & CO. PUBLISHERS LTD, GB, vol. 21, no. 13, 1 septembre 1998 (1998-09-01), pages 1107-1123, XP004146571 ISSN: 0140-3664

## Description

La présente invention concerne une plate-forme de médiation destinée à être installée dans un réseau de transport de messages entre un ou plusieurs clients et un ou plusieurs serveurs ou entre un ou plusieurs clients, un ou plusieurs serveurs et au moins un proxy conformément à des protocoles. La présente invention concerne également un réseau qui est pourvu d'au moins une telle plate-forme.

Avec l'avènement de l'Internet depuis quelques années, on assiste actuellement à un foisonnement de protocoles de commande de service dans le monde IP. Certains sont issus de standards issus de l'IETF (HTTP, FTP, SIP, RTSP, ...) ou d'autres organismes tels que le W3C ou l'OMG (SOAP, CORBA, java/RMI). D'autres deviennent des standards de fait de par le nombre d'utilisateurs: il s'agit par exemple de "Windows Media Player® " ou "Real One® ". D'autres encore provenant de la communauté Peer2Peer émergent et évoluent plus rapidement que les standards aujourd'hui classiques : il s'agit par exemple de Gnutella® , Napster® ; Freenet, Chord® , FASD® .

Ces protocoles sont intégrés aux applications Internet traditionnelles (web, transfert de fichiers, messagerie, VOIP, "streaming audio/vidéo", nommage, ...). Elles peuvent faire intervenir deux acteurs (l'un est généralement appelé le client ou utilisateur et l'autre le serveur ou fournisseur de services) ou trois acteurs (en plus du client et du serveur, intervient un acteur intermédiaire généralement appelé le médiateur de service (ou encore proxy) pouvant jouer le rôle de mise en correspondance, de gestion de présence/localisation, ou de filtrage, ou autre.

Pour pouvoir communiquer correctement, ces acteurs doivent connaître les protocoles utilisés afin d'en comprendre chacun les messages. Cependant, dans le cas d'un modèle à trois acteurs, du fait du nombre important deprotocoles que l'on peut utiliser aujourd'hui, il est difficile d'intégrer tous ces protocoles dans la médiation de services gérée par le médiateur de service, comme c'est le cas dans l'article "World Wide Web proxies" de Arie Luotonen et Kevin Altis, dans lequel le jeu de protocoles est assez simple. De plus, l'apparition de nouveaux protocoles est relativement fréquente, ce qui pose des problèmes de mise à jour des médiateurs deservices.

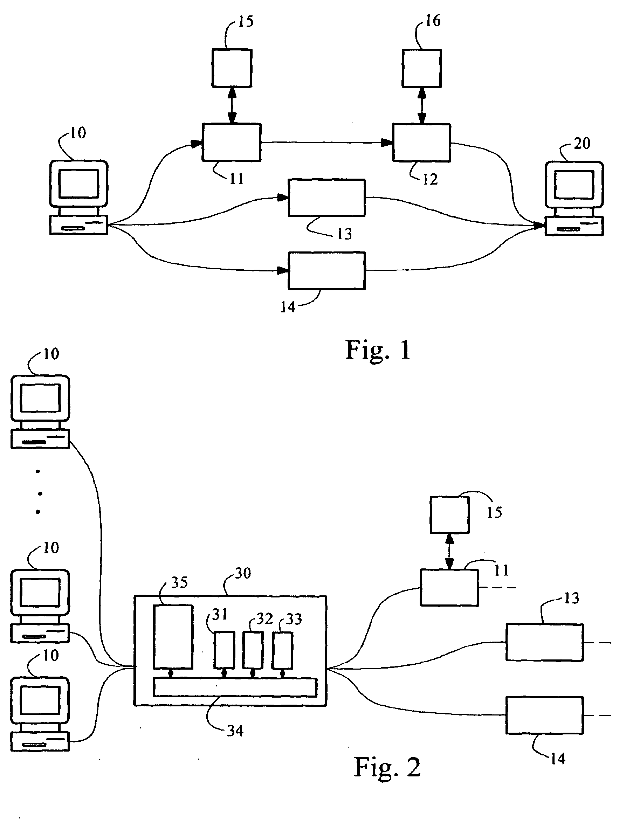

On a représenté à la Fig. 1, deux machines 10 et 20 qui peuvent communiquer entre elles aux moyens de trois protocoles, par exemple SIP (Session Initiation Protocol : protocole d'initialisation de la signalisation), http et H323. Elles utilisent pour ce faire des médiateurs de service, ou proxies, 11, 12 pour le protocole SIP, 13 pour le protocole http et 14 pour le protocole H323. Ces médiateurs de service peuvent être sur des machines autres du réseau, par exemple sur une machine appropriée du réseau. Comme c'est le cas pour les médiateurs de service 11 et 12, les médiateurs de service peuvent utiliser des bases de données (voir les bases de données 15 et 16).

Chaque liaison entre deux machmes, telles que les machines 10 et 20, peut être considérée comme un réseau de protocole pour le protocole concerné. Chaque réseau de protocole ayant par nature une configuration différente de celle d'un autre réseau de protocole, cela implique pour l'utilisateur de configurer chaque application en fonction du protocole concerné et; pour ce faire, d'en connaître le paramétrage exact, comme c'est le cas dans l'article "Internet/Intranet firewall security-policy, architecture and transaction services", de Ray Hunt. Il devrait aussi vérifier (et espérer) qu'il n'y a pas une configuration semblable pour un autre protocole qui interférerait avec le premier, ce qui entraînerait le non-fonctionnement d'une dès deux applications, voire des deux applications, utilisant ces protocoles.

Par exemple, une application permettant de naviguer sur l'internet en utilisant le protocole http requiert de spécifier le nom du proxy (nom complet) et le port utilisé s'il y a lieu. Une application permettant d'établir une communication de Voix sur IP en utilisant le protocole SIP doit également spécifier le nom du proxy (nom complet ou adresse IP) et le port utilisé. En protocole H323, les mêmes informations sont nécessaires concernant le gatekeeper (notion de proxy utilisée dans un contexte de protocole H323)

On comprendra donc que, plus le nombre de protocoles et d'applications associées va croître, plus les différentes configurations de la machine qui mettront en oeuvre ces applications seront difficiles à réaliser sans interférences entre protocoles et, par conséquent, plus fortes sont les chances de voir surgir des problèmes d'incompatibilité.

Le but de la présente invention est de permettre aux usagers de n'avoir qu'une unique configuration pour l'ensemble des applications dont dispose leurs machines tout en garantissant une adaptation rapide du réseau à l'apparition ou simplement à la mise à jour d'un protocole.

A cet effet, la présente invention concerne une plate-forme de médiation destinée à être installée dans un réseau de transport de messages entre un ou plusieurs clients et un ou plusieurs serveurs ou entre un ou plusieurs clients, un ou plusieurs serveurs et au moins un proxy conformément à des protocoles. La plate-forme est accessible à des terminaux de client, et est pourvue des piles de protocole de tous les protocoles qu'elle est susceptible de traiter A la réception terminal client d'un message conforme à un protocole donné, la plate-forme traite ledit message au moyen de la pile de protocole correspondant puis elle route ledit message à destination d'un proxy ou d' un serveur conformément audit protocole, audit message et à des données de paramétrage correspondant audit protocole. La plate-forme comprend également une base de données qui, pour chaque protocole dont elle a la pilé de protocole, recense lesdites données de paramétrage des proxys et serveurs pertinents et de moyens de routage.

Selon une caractéristique avantageuse de la présente invention, ladite plate-forme de médiation comporte une interface de programmation prévue pour recevoir des données destinées à mettre à jour les données de paramétrage de chacun desdits protocoles dont ladite plate-forme possède une pile de protocole.

Afin d'assurer une adaptabilité de la plate-forme à l'apparition de nouveaux protocoles pour lesquels elle ne dispose pas encore de pile de protocole, ladite plate-forme de médiation peut comporter une interface de programmation prévue pour recevoir une nouvelle pile de protocole d'un protocole dont ladite plate-forme ne possède pas encore la pile de protocole et des moyens pour pouvoir installer ladite pile de protocole.

Afin d'enrichir le fonctionnement de ladite plate-forme pour des traitements spécifiques à effectuer sur les messages de certains protocoles, ladite plate-forme de médiation peut comporter une interface de programmation prévue pour recevoir du code objet pour faire subir un traitement spécifique aux messages d'un protocole donné et des moyens pour instancier ledit code objet dudit traitement spécifique, ladite pile de protocole étant en outre prévue pour router les messages émis par un terminal de client vers ledit traitement spécifique avant d'être routés par lesdits moyens de routage de ladite plate-forme. Lesdits messages dudit protocole qui subissent ledit traitement spécifique peuvent être des messages du plan de transfert ou encore des messages du plan de commande.

Selon une caractéristique avantageuse de la présente invention, ladite plate-forme de médiation comporte plusieurs environnements d'exécution différents pour l'implémentation dudit traitement spécifique, par exemple des environnements différemment sécurisés.

Avantageusement, ladite ou lesdites interfaces de programmation sont prévues pour recevoir ledit code objet selon une méthode dite à paquets actifs ou selon une méthode dite à noeuds actifs.

Selon une caractéristique avantageuse de la présente invention, ladite plate-forme de médiation comporte des moyens pour transférer à une autre plate-forme de médiation des données de paramétrage sur requête de cette dernière.

Selon une caractéristique avantageuse de la présente invention, ladite plate-forme de médiation comporte des moyens pour transférer à une autre plate-forme de médiation des piles de protocole et des données de paramétrage correspondantes sur requête de cette dernière.

La présente invention concerne également un réseau de transport de messages entre un ou plusieurs clients et un ou plusieurs serveurs ou entre un ou plusieurs clients, un ou plusieurs serveurs et au moins un proxy conformément à des protocoles qui comprend au moins une plate-forme de médiation telle qu'il vient d'être décrit.

Ce réseau comporte avantageusement au moins une base de données de paramétrage de chacun desdits protocoles et des moyens de transfert de données de paramétrage à l'interface de programmation d'au moins une desdites plate-formes de médiation.

Lesdites données de paramétrage sont par exemple, soit transmises de plate-forme en plate-forme dans des paquets actifs que seules les plate-formes reconnaissent et peuvent traiter, soit en mode diffusé à l'ensemble des plate-formes que compose le réseau.

Ce réseau comporte avantageusement au moins une base de données de piles de procole et des moyens de transfert des piles de protocole à l'interface de programmation de ladite ou d'au moins une des plate-formes de médiation dudit réseau.

Ce réseau comporte avantageusement un fournisseur de service comportant des moyens de transfert du code objet d'un traitement spécifique pour un protocole donné à destination de l'interface de programmation de ladite ou d'au moins une des plate-formes de médiation dudit réseau.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est une vue schématique d'un réseau de transport par paquets selon l'état de la technique,
La Fig. 2 est une vue schématique d'une partie d'un réseau de transport par paquets selon un premier mode de réalisation de la présente invention, et
La Fig. 3 est une vue schématique d'une partie d'un réseau de transport par paquets selon un second mode de réalisation de la présente invention.

On a représenté à la Fig. 2 l'architecture générale d'une plate-forme de médiation selon un premier mode de réalisation de la présente invention.

Sur cette Fig. 2, on peut donc voir une plate-forme de médiation 30 laquelle comporte des piles 31, 32 et 33 de différents protocoles et une unité de routage 34. Elle est accessible par des machine-clients 10 (appelés clients ci-après) communiquant avec elle par tout protocole de leur choix mais connu de la plate-forme 30 (du fait qu'il comporte les piles de protocole 31, 32 et 33) et elle peut router, au moyen de l'unité de routage 34, les messages émis par la machine-client 10 vers un des proxies 11, 13, 14 (ces derniers sont identiques à ceux qui ont été représentés à la Fig. 1) ou vers un serveur conformément au protocole utilisé. Pour ce faire, chaque pile de protocole 31, 32, 33 est à même d'analyser les paquets émis par chaque machine-client 10 et d'en déduire les paramètres pour leur transmission au proxy du protocole correspondant ou au serveur désiré.

La plate-forme doit contenir une partie de code permettant de construire une base de données de proxy interne 35 pour la région qui la concerne et la garder en mémoire.

L'avantage qui résulte de cette architecture réside dans le fait que chaque utilisateur du réseau a la tâche grandement simplifiée lorsqu'il veut configurer sa machine. En effet, quelque soit le protocole utilisé dès lors qu'il est connu de la plate-forme 30 à laquelle il aura accès, les paramètres de configuration sont ceux de la plate-fonne de médiation 30. Il n'y a donc pas d'interférences possibles entre paramétrages de protocole.

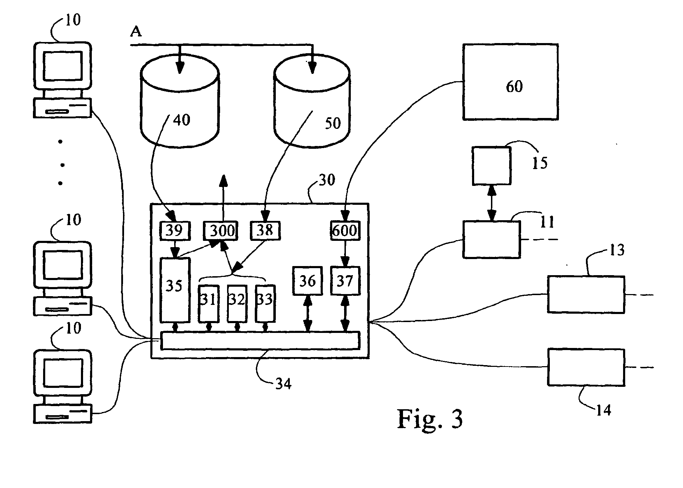

A la Fig. 3, on a représenté un second mode de réalisation de la présente invention lequel permet de résoudre le problème de la méconnaissance par la plate-forme 30 d'un protocole qui est utilisée par une machine-client 10. Par rapport au mode de réalisation précédent, la plate-forme 30 comprend une interface de programmation 38 prévue pour recevoir d'une base de données de protocoles 50 une nouvelle pile de protocole et l'installer. Elle comprend encore une interface de programmation 39 prévue pour recevoir d'une base de données de paramétrage 40 des données de paramétrage de chacun des protocoles dont la plate-forme 30 possède une pile de protocole. En même temps qu'elle transmet une nouvelle pile de protocole la base de données 50 peut transmettre du code objet pour des traitements spécifiques liés à ce nouveau protocole. L'interface de programmation 38 comporte alors des moyens pour instancier ce code objet.

Sur cette Fig. 3, on voit également la base de données de paramétrage 40 prévue pour pouvoir transférer des données de paramétrage à l'interface de programmation 39. On voit également la base de données de piles de protocole 50 prévue pour pouvoir transférer une pile de protocole à l'interface de programmation 38.

On notera que, pourvue notamment de l'interface de programmation 38 qui est prévue pour recevoir et pouvoir installer de nouvelles piles de protocoles, la plate-forme de médiation 30 est en fait une plate-forme de réseau actif.

Cette variante de réalisation de la présente invention est en effet basée sur l'utilisation de la technologie des réseaux dits actifs. Pour une description des réseaux actifs, on pourra se reporter notamment aux articles de Tennennhouse & Wetherall disponibles à l'adresse Internet http://www.tns.lcs.mit.edu. Le principe de base de ces réseaux actifs est de munir les routeurs d'un réseau de paquets d'une interface de programmation ouverte à un tiers, tel qu'un fournisseur de service, un utilisateur ou l'opérateur lui-mème. Le coeur du réseau n'est plus vu comme une sorte de tuyau, dans lequel on fait transiter les données le plus vite possible, mais comme une machine virtuelle répartie.

Celui qui souhaite mettre en place une fonctionnalité à un noeud du réseau, va transférer à ladite interface de programmation du routeur correspondant le code objet correspondant à cette fonctionnalité. En fait, il existe deux modes opératoires pour transférer un tel code :
- un premier mode où il est transféré via la charge utile d'un paquet actif. Généralement, il circule dans tout le réseau et le code peut être implémenté dans tous les noeuds du réseau. Cette méthode est dite à paquets actifs ("in-band" en terminologie anglo-saxonne),
- un second mode où il est téléchargé directement entre deux serveurs. Cette méthode est dite à noeuds actifs ("out-of-band" en terminologie anglo-saxonne).

La plate-forme de médiation 30 de la Fig. 3 est donc un noeud d'un réseau actif auquel elle appartient et les interfaces de programmation 38 ou 39 comportent donc des composants permettant d'utiliser les méthodes de transfert par paquet actif (« in-band ») et par noeuds actifs (« out-of-band »).

La plate-forme de médiation 30 a essentiellement pour rôle de recevoir des messages, par exemple contenus dans des paquets de type IP (Internet Protocol) (quel que soit le protocole applicatif utilisé au-dessus de la couche IP) et de trouver le proxy ou un serveur adapté à ce protocole en fonction de la localisation de l'utilisateur, comme le faisait déjà la plate-forme 30 de la Fig. 2. Elle utilise pour ce faire la base de données de proxy 35 dont elle dispose en interne.

Néanmoins, si le protocole utilisé par la machine-client 10 n'est pas présent dans la base de données interne 35 de la plate-forme 30, cette dernière le télécharge grâce aux technologies de réseaux actifs, par exemple depuis le serveur de piles de protocole 50 en utilisant la méthode des noeuds actifs ("out-of-band"). La plate-forme 30 doit ensuite instancier le code qui correspond à cette pile de protocole. Elle doit pour ce faire intégrer une fonctionnalité d'instanciation automatique.

Le serveur des piles de protocoles 50 est une base de données de référencement pour tous les protocoles utilisés dans le réseau (HTTP, SIP, H323, etc.). Ce serveur de piles de protocoles 50 est géré par l'administrateur A du réseau qui met à jour ce serveur en fonction des protocoles déployés. Par exemple, si un nouveau protocole X est déployé, l'administrateur a juste à mettre cette pile de protocole sur le serveur à disposition de toutes les plate-formes 30 du réseau.

Le serveur de base de données de Proxy 40 a pour rôle de maintenir la base de données à jour contenant les adresses des proxy spécifiques à un protocole ainsi que la localisation (région, plaque ou autre dénomination de même signification) pour laquelle le proxy est valable. Ce serveur 40 est mis à jour par l'administrateur A du réseau qui sait quels proxys sont déployés dans le réseau ou pour quelle région, etc. En cas de modification du contenu du serveur par l'administrateur A, le serveur de base de proxy 400 transmet la nouvelle base en utilisant la technologie de réseau actif (approche « out-of-band ») en protocole multicast vers toutes les plate-formes 30 du réseau.

En même temps qu'elle implémente une nouvelle pile de protocole, la plate-forme remet à jour sa base de données interne 35 et ce au moyen du serveur de la base de données de proxy 40. Ensuite, comme précédemment dans le cas d'un protocole dont elle disposait de la pile, elle achemine les messages de ce type de protocole vers le ou les proxies correspondants, par exemple en déterminant leur localisation grâce à sa base de données interne 35 ou vers le serveur désiré dont l'adresse est contenue dans le message.

On notera que plusieurs codes peuvent résider dans une même plate-forme 30, il faut donc pouvoir les isoler pour éviter toute interférence entre eux. Chacun s'exécutera donc dans un environnement d'exécution spécifique.

Les réseaux actifs permettent le déploiement dynamique de protocoles de manière quasi-instantanée. De plus, il est possible de faire fonctionner plusieurs protocoles différents, ce qui résout le problème de compatibilité et permet que chaque application puisse utiliser son propre protocole.

Dans la plate-forme 30, est également implémenté un code de traitement 36 destiné au traitement de messages d'un protocole donné. Ce code de traitement 36 est par exemple téléchargé puis instancié via l'interface de programmation 600 dans la plate-forme 30 par des fournisseurs de services tiers 60. Ainsi, le code de la pile du protocole correspondant va permettre le routage des message reçus selon ce protocole vers le code de traitement 36 par lequel lesdits messages seront traités avant d'être retransmis, via l'unité de routage 34, vers un proxy de ce protocole ou un serveur.

On notera que la plate-forme 30 doit pour ce faire implémenter une fonctionnalité de démultiplexage et transférer les messages vers le code de traitement adéquat.

Le traitement spécifique 36 est par exemple un traitement d'un protocole propriétaire.

Mais il peut également s'agir de traitements particuliers à appliquer à des messages d'un protocole non-propriétaire et, dans ce dernier cas, le code de traitement 36 est par exemple mis en place par l'opérateur du réseau lui-même de manière à apporter à ce réseau une valeur ajoutée. Dans ce cas aussi, deux types de code de traitement 36 peuvent être envisagés.

Le premier type correspond à l'interception des messages de données dans le plan de transfert pour effectuer des traitements particuliers, comme le transcodage de séquences audio/vidéo (pour des services de type WebTV, de type vidéoconférence permettant de connecter deux terminaux qui sont initialement incompatibles), comme le transcodage d'images (images fixes dans des pages Web si l'utilisateur n'est pas capable de décoder le format des images qui lui sont transmises), comme la traduction de texte (traduction de langue), ou comme le filtrage d'informations, etc.

Un second type est relatif au plan de commande. Il regroupe les fonctionnalités de pare-feu (firewall en anglais) pour gérer l'ouverture et la fermeture de ports à la demande, les fonctionnalités de re-direction d'appels en cas de mobilité de l'utilisateur, de distribution de charges entre plusieurs serveurs, etc.

Les traitements effectués par le code de traitement 36 peuvent également être déployés par des fournisseurs de service tiers, comme le fournisseur 60 de la Fig. 3. Comme cela est mentionné ci-dessus, ils sont alors généralement des traitements propriétaires. Grâce aux technologies de réseaux actifs, un fournisseur de service tiers (par exemple de jeux en réseau ou de services de recherche d'information (lookup service)) peut télécharger sur la plate-forme 30 un code de traitement propriétaire 37 effectuant un traitement spécifique pour ce service. Dans ce cas, seuls les paquets correspondant à ce service seront routés vers le code de traitement propriétaire 37, puis traités (par exemple modifiés ou gardés en mémoire (en fonction du traitement que le fournisseur de service aura implémenté)) avant d'être de nouveau routés, par l'unité de routage 34, vers le destinataire.

Le code de traitement 36 ou 37 peut être téléchargé suivant la méthode des paquets actifs (« in-band ») ou la méthode des noeuds actifs (« out-of-band ») selon le code lui-même et surtout selon le propriétaire de ce code.

En effet, la plate-forme 30 doit pouvoir fournir deux environnements d'exécution distincts :

Un environnement protégé, sécurisé ayant pour but de recevoir des applications « sûres », c'est-à-dire ne comportant pas de virus, d'interférences, etc. Les applications concernées seront alors déployées par l'administrateur de réseau (ou l'entité en charge). Dans cet environnement, la méthode des noeuds actifs (« out-of-band ») des réseaux actifs sera privilégiée.

Un environnement non sécurisé (ou moins sécurisé que le précédent) dans lequel des applications « non-sûres » seront déployées. Cela concerne principalement le code de fournisseur de service tiers n'ayant pas d'accord avec l'opérateur de réseau et dont le code n'est pas certifié. Dans cet environnement, les deux approches « in-band » et « out-of-band » pourront être mises en oeuvre afin de laisser le choix au fournisseur tiers d'utiliser celle qui sera la plus appropriée pour le déploiement de son service.

Bien évidemment, il faudra une isolation parfaite entre les deux environnements d'exécution sur la plate-forme 30.

La plate-forme 30 est également pourvue de moyens 300 pour transférer à une autre plate-forme de médiation des piles de protocole et des données de paramétrage correspondantes sur requête de cette dernière.

Les avantages de la présente invention sont les suivants : configuration unique (et donc simplifiée) pour les applications de l'utilisateur ; mise à jour facile des réseaux de protocoles. Il est facile de rajouter (ou de supprimer) des proxy pour un protocole donné dans le réseau de ce protocole. L'administrateur aura simplement à mettre à jour la base de données générale des proxy et transférer ces informations vers les plate-formes 30 du réseau. Cela sera totalement transparent pour les utilisateurs ; possibilité d'apporter de la valeur ajoutée dans le réseau en effectuant des traitements particuliers pour certains protocoles, certains services ou certains utilisateurs, etc. ; architecture permettant un développement plus rapide de nouveaux services, puisqu'un fournisseur de service tiers sera capable de déployer son service ou une partie sur une plate-forme.

On notera qu'au moyen de la présente invention, l'administration est simplifiée pour l'administrateur puisqu'il lui suffit de mettre à jour :
- un seul serveur de protocoles au lieu d'installer ce protocole sur tous les équipements puisque la plate-forme viendra elle-même récupérer ce protocole et l'instancier,
- une seule base de données de Proxy puisque les informations correspondantes seront transmises, après mises à jour, soit de plate-forme en plate-forme dans des paquets actifs que seules les plate-formes reconnaîtront et pourront traiter, soit en mode diffusé (dit aussi mode multi-cast) à l'ensemble des plate-formes que compose le réseau.

On notera que l'utilisation d'un réseau actif permet à l'invention le chargement dynamique de passerelles applicatives (proxy) dans les noeuds du réseau, la mise en place de fonctions de surveillance spécifiques à chaque protocole instancié dans le réseau, la mise en place de fonctions de gestion spécifiques à chaque protocole instancié dans le réseau, la mise en oeuvre d'agrégation de trafic spécifique à la sémantique des protocoles, ce qui permet d'économiser les ressources du réseau, etc.

## Revendications

1. Plate-forme de médiation destinée à être installée dans un réseau de transport de messages entre un ou plusieurs clients et un ou plusieurs serveurs ou entre un ou plusieurs clients, un ou plusieurs serveurs et au moins un proxy conformément à des protocoles, ladite plate-forme étant accessible à des terminaux de client, pourvue des piles de protocole de tous les protocoles qu'elle est susceptible de traiter et telle qu'à la réception d'un terminal client d'un message conforme à un protocole donné, elle traite ledit message au moyen de la pile de protocole correspondant puis elle route ledit message à destination d'un proxy ou d'un serveur conformément audit protocole, audit message et à des données de paramétrage correspondant audit protocole, la plate-forme de médiation étant **charactérisée en ce qu**'elle est pourvue d'une base de données qui, pour chaque protocole dont elle a la pile de protocole, recense lesdites données de paramétrage des proxys et serveurs pertinents et de moyens de routage.

2. Plate-forme de médiation selon la revendication 1, **caractérisée en ce qu'**elle comporte une interface de programmation prévue pour recevoir des données de paramétrage de chacun desdits protocoles dont ladite plate-forme possède une pile de protocole.

3. Plate-forme de médiation selon la revendication 1 ou 2, **caractérisée en ce qu'**elle comporte une interface de programmation prévue pour recevoir une nouvelle pile de protocole d'un protocole dont ladite plate-forme ne possède pas encore la pile de protocole et des moyens pour installer ladite pile de protocole.

4. Plate-forme de médiation selon une des revendications précédentes, **caractérisée en ce qu'**elle comporte une interface de programmation prévue pour recevoir du code objet pour faire subir un traitement spécifique aux messages d'un protocole donné et des moyens pour instancier ledit code objet dudit traitement spécifique, ladite pile de protocole étant en outre prévue pour router les messages émis par un terminal de client vers ledit traitement spécifique avant d'être routés par lesdits moyens de routage de ladite plate-forme.

5. Plate-forme de médiation selon la revendication 4, **caractérisée en ce que** lesdits messages dudit protocole qui subissent ledit traitement spécifique sont les messages du plan de transfert.

6. Plate-forme de médiation selon la revendication 4, **caractérisée en ce que** lesdits messages dudit protocole qui subissent ledit traitement spécifique sont les messages du plan de commande.

7. Plate-forme de médiation selon une des revendications 4 à 6, **caractérisée en ce qu'**elle comporte plusieurs environnements d'exécution différents pour l'implémentation dudit traitement spécifique, par exemple des environnements différemment sécurisés.

8. Plate-forme de médiation selon une des revendications 2 à 7, **caractérisée en ce que** ladite ou lesdites interfaces de programmation sont prévues pour recevoir ledit code objet selon une méthode dite à paquets actifs.

9. Plate-forme de médiation selon une des revendications 2 à 7, **caractérisée en ce que** ladite ou lesdites interfaces de programmation sont prévues pour recevoir ledit code objet selon une méthode dite à noeuds actifs.

10. Plate-forme de médiation selon une des revendications 2 à 9, **caractérisée en ce qu'**elle comporte des moyens pour transférer à une autre plate-forme de médiation des données de paramétrage sur requête de cette dernière.

11. Plate-forme de médiation selon une des revendications 2 à 10, **caractérisée en ce qu'**elle comporte des moyens pour transférer à une autre plate-forme de médiation des piles de protocole et des données de paramétrage correspondantes sur requête de cette dernière.

12. Réseau de transport de messages entre un ou plusieurs clients et un ou plusieurs serveurs ou entre un ou plusieurs clients, un ou plusieurs serveurs et au moins un proxy conformément à des protocoles, **caractérisé en ce qu'**il comprend au moins une plate-forme de médiation selon une des revendications 1 à 11.

13. Réseau selon la revendication 12 lorsque celle-ci est en dépendance d'au moins la revendication 2, **caractérisé en ce qu'**il comporte au moins une base de données de paramétrage de chacun desdits protocoles et des moyens de transfert de données de paramétrage à l'interface de programmation d'au moins une desdites plate-formes de médiation.

14. Réseau selon la revendication 13, **caractérisé en ce que** lesdites données de paramétrage sont transmises de plate-forme en plate-forme dans des paquets actifs que seules les plate-formes reconnaissent et peuvent traiter.

15. Réseau selon la revendication 13, **caractérisé en ce que** lesdites données de paramétrage sont transmises en mode diffusé à l'ensemble des plate-formes que compose le réseau.

16. Réseau selon une des revendications 12 à 15 lorsque celle-ci est en dépendance d'au moins la revendication 3, **caractérisé en ce qu'**il comporte au moins une base de données de piles de protocole et des moyens de transfert des piles de protocole à l'interface de programmation de ladite ou d'au moins une des plate-formes de médiation dudit réseau.

17. Réseau selon une des revendications 12 à 16 lorsque celle-ci est en dépendance de la revendication 4, **caractérisé en ce qu'**il comporte au moins un fournisseur de service comportant des moyens de transfert du code objet d'un traitement spécifique pour un protocole donné à destination de l'interface de programmation de ladite ou d'au moins une des plate-formes de médiation dudit réseau.

## Claims

1. Mediation platform intended to be installed in a network for transporting messages between one or more clients and one or more servers or between one or more clients, one or more servers and at least one proxy conforming to protocols, accessible to client terminals, the said platform being provided with protocol stacks of all the protocols that it may process and such that on receipt from a client terminal of a message conforming to a given protocol, it processes the said message by means of the corresponding protocol stack then it routes the said message to a proxy or a server conforming to the said protocol, to the said message and to parametrization data corresponding to the said protocol, the mediation platform being **characterized in that** it is provided with a database which, for each protocol for which it has the protocol stack, catalogues the said parametrization data for the proxies and servers that are relevant and for routing means.

2. Mediation platform according to Claim 1, **characterized in that** it comprises a programming interface designed to receive parametrization data for each of the said protocols of which the said platform possesses a protocol stack.

3. Mediation platform according to Claim 1 or 2, **characterized in that** it comprises a programming interface designed to receive a new protocol stack for a protocol of which the said platform does not yet possess the protocol stack and means for installing the said protocol stack.

4. Mediation platform according to one of the preceding claims, **characterized in that** it comprises a programming interface designed to receive object code for subjecting the messages of a given protocol to a specific processing and means for instantiating the said object code of the said specific processing, the said protocol stack being moreover designed to route the messages sent by a client terminal to the said specific processing before being routed by the said routing means of the said platform.

5. Mediation platform according to Claim 4, **characterized in that** the said messages of the said protocol which are subjected to the said specific processing are the messages of the transfer plane.

6. Mediation platform according to Claim 4, **characterized in that** the said messages of the said protocol which are subjected to the said specific processing are the messages of the command plane.

7. Mediation platform according to one of Claims 4 to 6, **characterized in that** it comprises several different execution environments for the implementation of the said specific processing, for example differently secured environments.

8. Mediation platform according to one of Claims 2 to 7, **characterized in that** the said programming interface or interfaces are designed to receive the said object code according to a so-called active-packet method.

9. Mediation platform according to one of Claims 2 to 7, **characterized in that** the said programming interface or interfaces are designed to receive the said object code according to a so-called active-node method.

10. Mediation platform according to one of Claims 2 to 9, **characterized in that** it comprises means for transferring parametrization data to another mediation platform when requested by the latter.

11. Mediation platform according to one of Claims 2 to 10, **characterized in that** it comprises means for transferring protocol stacks and corresponding parametrization data to another mediation platform when requested by the latter.

12. Network for transporting messages between one or more clients and one or more servers or between one or more clients, one or more servers and at least one proxy conforming to protocols, **characterized in that** it comprises at least one mediation platform according to one of Claims 1 to 11.

13. Network according to Claim 12 when the latter is under the dependency of at least Claim 2, **characterized in that** it comprises at least one parametrization database for each of the said protocols and means for transferring parametrization data to the programming interface of at least one of the said mediation platforms.

14. Network according to Claim 13, **characterized in that** the said parametrization data are transmitted from platform to platform in active packets that only the platforms recognize and can process.

15. Network according to Claim 13, **characterized in that** the said parametrization data are transmitted in broadcast mode to all the platforms making up the network.

16. Network according to one of Claims 12 to 15 when the latter is under the dependency of at least Claim 3, **characterized in that** it comprises at least one database of protocol stacks and means of transferring the protocol stacks to the programming interface of the said or of at least one of the mediation platforms of the said network.

17. Network according to one of Claims 12 to 16 when the latter is under the dependency of Claim 4, **characterized in that** it comprises at least one service provider comprising means of transferring the object code of a specific processing for a given protocol destined for the programming interface of the said or of at least one of the mediation platforms of the said network.

## Patentansprüche

1. Vermittlungsplattform, die dazu bestimmt ist, in einem Netzwerk zur Übermittlung von Nachrichten gemäß Protokollen zwischen einem oder mehreren Kunden und einem oder mehreren Servern oder zwischen einem oder mehreren Kunden, einem oder mehreren Servern und mindestens einem Proxy installiert zu werden, wobei die Plattform für Kundenterminals zugänglich, mit Protokollstapeln aller Protokolle, die sie verarbeiten kann, versehen und derart ist, dass sie bei Empfang einer Nachricht von einem Kundenterminal gemäß einem gegebenen Protokoll die Nachricht mittels des entsprechenden Protokollstapels verarbeitet und dann die Nachricht zu einem Proxy oder zu einem Server gemäß dem Protokoll, der Nachricht und dem Protokoll entsprechenden Parametrierdaten routet, wobei die Vermittlungsplattform **dadurch gekennzeichnet ist, dass** sie mit einer Datenbasis versehen ist, die für jedes Protokoll, dessen Protokollstapel sie hat, die Parametrierdaten der relevanten Proxies und Server und von Routingeinrichtungen erfasst.

2. Vermittlungsplattform nach Anspruch 1, **dadurch gekennzeichnet, dass** sie eine Programmierschnittstelle aufweist, die vorgesehen ist, um Parametrierdaten jedes der Protokolle zu empfangen, von denen die Plattform einen Protokollstapel besitzt.

3. Vermittlungsplattform nach Anspruch 1 oder 2, **dadurch gekennzeichnet, dass** sie eine Programmierschnittstelle, die vorgesehen ist, um einen neuen Protokollstapel eines Protokolls zu empfangen, von dem die Plattform noch nicht den Protokollstapel besitzt, und Einrichtungen zum Installieren des Protokollstapels aufweist.

4. Vermittlungsplattform nach einem der vorhergehenden Ansprüche, **dadurch gekennzeichnet, dass** sie eine Programmierschnittstelle, die vorgesehen ist, um Objektcode zu empfangen, um die Nachrichten eines gegebenen Protokolls einer spezifischen Verarbeitung zu unterziehen, und Einrichtungen aufweist, um den Objektcode der spezifischen Verarbeitung zu instanziieren, wobei der Protokollstapel außerdem vorgesehen ist, um die von einem Kundenterminal gesendeten Nachrichten zur spezifischen Verarbeitung zu routen, ehe sie von den Routingeinrichtungen der Plattform geroutet werden.

5. Vermittlungsplattform nach Anspruch 4, **dadurch gekennzeichnet, dass** die Nachrichten des Protokolls, die der spezifischen Verarbeitung unterzogen werden, die Nachrichten der Übertragungsebene sind.

6. Vermittlungsplattform nach Anspruch 4, **dadurch gekennzeichnet, dass** die Nachrichten des Protokolls, die der spezifischen Verarbeitung unterzogen werden, die Nachrichten der Steuerebene sind.

7. Vermittlungsplattform nach einem der Ansprüche 4 bis 6, **dadurch gekennzeichnet, dass** sie mehrere unterschiedliche Ausführungsumgebungen zur Implementierung der spezifischen Verarbeitung aufweist, zum Beispiel unterschiedlich gesicherte Umgebungen.

8. Vermittlungsplattform nach einem der Ansprüche 2 bis 7, **dadurch gekennzeichnet, dass** die Programmierschnittstelle(n) vorgesehen sind, um den Objektcode gemäß einem so genannten Verfahren mit aktiven Paketen zu empfangen.

9. Vermittlungsplattform nach einem der Ansprüche 2 bis 7, **dadurch gekennzeichnet, dass** die Programmierschnittstelle(n) vorgesehen sind, um den Objektcode gemäß einem so genannten Verfahren mit aktiven Knoten zu empfangen.

10. Vermittlungsplattform nach einem der Ansprüche 2 bis 9, **dadurch gekennzeichnet, dass** sie Einrichtungen aufweist, um zu einer anderen Vermittlungsplattform auf deren Anforderung Parametrierdaten zu übertragen.

11. Vermittlungsplattform nach einem der Ansprüche 2 bis 10, **dadurch gekennzeichnet, dass** sie Einrichtungen aufweist, um zu einer anderen Vermittlungsplattform auf deren Anforderung Protokollstapel und entsprechende Parametrierdaten zu übertragen.

12. Netzwerk zur Übermittlung von Nachrichten gemäß Protokollen zwischen einem oder mehreren Kunden und einem oder mehreren Servern oder zwischen einem oder mehreren Kunden, einem oder mehreren Servern und mindestens einem Proxy, **dadurch gekennzeichnet, dass** es mindestens eine Vermittlungsplattform nach einem der Ansprüche 1 bis 11 aufweist.

13. Netzwerk nach Anspruch 12, wenn dieser mindestens von Anspruch 2 abhängt, **dadurch gekennzeichnet, dass** es mindestens eine Datenbasis mit Parametrierdaten jedes der Protokolle und Einrichtungen zur Übermittlung von Parametrierdaten an die Programmierschnittstelle mindestens einer der Vermittlungsplattformen aufweist.

14. Netzwerk nach Anspruch 13, **dadurch gekennzeichnet, dass** die Parametrierdaten von Plattform zu Plattform in aktiven Paketen übertragen werden, die nur die Plattformen erkennen und verarbeiten können.

15. Netzwerk nach Anspruch 13, **dadurch gekennzeichnet, dass** die Parametrierdaten im Streumodus an die Gesamtheit der Plattformen übertragen werden, aus denen das Netzwerk zusammengesetzt ist.

16. Netzwerk nach einem der Ansprüche 12 bis 15, wenn dieser mindestens von Anspruch 3 abhängt, **dadurch gekennzeichnet, dass** es mindestens eine Datenbasis von Protokollstapeln und Einrichtungen zur Übertragung der Protokollstapel an die Programmierschnittstelle der oder mindestens einer der Vermittlungsplattformen des Netzwerks aufweist.

17. Netzwerk nach einem der Ansprüche 12 bis 16, wenn dieser von Anspruch 4 abhängt, **dadurch gekennzeichnet, dass** es mindestens einen Diensterbringer aufweist, der Einrichtungen zur Übertragung des Objektcodes einer spezifischen Verarbeitung für ein gegebenes Protokoll zur Programmierschnittstelle der oder mindestens einer der Vermittlungsplattformen des Netzwerks aufweist.
